(19) Europäisches Patentamt
European Patent Office
Office européen des brevets

(11) **EP 2 579 207 A2**

(12) **EUROPEAN PATENT APPLICATION**

(43) Date of publication:
**10.04.2013 Bulletin 2013/15**

(51) Int Cl.:
***G06T 5/00*** (2006.01)          ***G06T 5/50*** (2006.01)

(21) Application number: **12186390.6**

(22) Date of filing: **27.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.10.2011 EA 201101502**

(71) Applicant: **Zakrytoe Akcionernoe Obshchestvo "Impul's"**
**St.Petersburg 197343 (RU)**

(72) Inventor: **Merkuriev, Sergei Vasilievich**
**197343 Saint-Petersburg (RU)**

(74) Representative: **Anohins, Vladimirs et al**
**Agency Tria Robit**
**P.O. Box 22**
**1010 Riga (LV)**

(54) **Method of noise reduction in digital x-ray frames series**

(57)     A distinctive feature of the suggested method of noise reduction of digital x-ray image series is that frame-by-frame estimation of signal-dependent noise variance involves morphological deletion of pixel values of noise image corresponding with edges of the initial frame. Tabular dependence of the noise on signal intensity is obtained with the use of robust piecewise-linear approximation of interval estimations of noise variance. A noise map is computed as a pixel-by-pixel estimation of noise variance of the initial digital image. While estimation and compensation of motion and flicker-effect a pyramid scheme for the block correspondence search is applied. Motion estimation blocks are considered overlapped, while motion compensation the block overlappings are averaged by applying a flat weighting window. Flicker-effect compensation is implemented by division of the reference- and current frames by appropriate frames of of average values , which are obtained by LF-filtration of the given frames. To compensate flicker-effect the local average intensity of the reference frame is reduced to the local average intensity of the current frame, wherein the reference frame is divided by its motion-compensated frame of average values and multiplied by the frame of average values of the current frame. Recursive averaging providing motion compensation artifacts correction involves mixing of the current filtered frame with its initial version based on the computation of pixel and structural similarity of the given frames.

*Fig. 1*

## Description

### Field of the invention

The invention relates to the area of digital X-ray image processing, and can be used for solving problems connected with processing of digital X-ray frames obtained by using high-energy radiation including x-rays. More specifically the present invention is designed for image noise reduction in digital x-ray frame series.

### Previous state of the art

At present time clinical practice includes different methods of digital x-ray frames series processing: sharpness enhancement, anatomical structures emphasis, subtraction etc. The most important methods of digital x-ray frames series quality improvement are considered image noise reduction methods. So, the control of medical instruments during angiography procedure is implemented in real time also the vascular system is examined by injecting contrast medium through a catheter. In order to reduce patient/medical staff radiation-absorbed dose low doses being applied cause acquisition of medical images having low signal-to-noise (S/N) ratio. [Chan et. al., Image Sequence Filtering in Quantum-Limited Noise with Applications to Low-Dose Fluoroscopy, IEEE Trans. Medical Imaging, vol. 12, issue 3, 610-621, 1993]. Because of that in digital radiography it is urgent to consider the problem to develop a filtering method, with noise being able to save diagnostic information, to operate in real time at high values of resolution, frame rates and considerable level of signal intensity-dependent noise.

There are some problems which a researcher encounters when developing an algorithm for filtering of digital frames series for medical application. The first problem is connected with the evaluation of image noise the level of which essentially depends on signal intensity. The second problem refers to necessity to compensate possible abrupt change of signal intensity taking place when system of automatic intensity adjustment is used or due to x-ray tube instability. The third problem is connected with the consideration of frame series variability due to movements of different kind: table or x-ray tube/detector motion, patient's shift or physiological processes in his body, blood vessel contrast medium current. Finally, the forth problem is that it is necessary to observe a balance between filter quality and requirement to implement filtering in real time. This problem also involves filtering method selection: spatio-temporal average within stack of frames , temporal filtering within transformation space (pyramidal transformation, wavelet transformation etc.), combined averaging method etc. Let us describe each of these problems in detail.

Let us consider the problem of signal-dependent noise estimation. Practically every state-of-the-art noise filtering method, as for single digital frame so for their series, uses the information about noise spectral properties. A relatively large number of noise reduction methods apply noise variance value as a parameter. The publications of numerous authors demonstrate that the more precisely noise variance value is known the higher quality of noise reduction algorithm is. [Bosco et. al., Noise Reduction for Cfa Image Sensors Exploiting Hvs Behavior, Sensors 9(3), 1692-1713, 2009; Foi, Practical Denoising of Clipped or Overexposed Noisy Images, Proc. 16th European Signal Process. Conf., EUSIPCO, 2008].

Let us examine the nature of noise in digital radiography. A detector measures intensity of attenuated (i.e. of that having passed through an object being under examination) x-ray radiation. During exposure period each detector cell accumulates on the average $\overline{N}$ electrons by absorbing photons. The number of $N$ accumulated electrons can be modeled by Poisson - distributed random variable

$$P(N = n) = \exp(-\overline{N})\frac{\overline{N}^{n}}{n!}, \quad n \geq 0 .$$

Random fluctuations of absorbed photons are called photon noise. In modern detectors photon noise is the main noise source.

Additional noise sources includes detector noise: readout nose, thermal noise, amplifier noise, quantization distortion, etc. [Gino M., Noise, Noise, Noise]. Cumulative effect of the said noise sources is modeled by Gaussian distributed random variable [Bosco et. al., Noise Reduction for Cfa Image Sensors Exploiting Hvs Behavior, Sensors 9 (3), 1692-1713, 2009; Foi et. al., Practical poissonian - gaussian noise modeling and fitting for single-image raw-data, Image Processing, IEEE Transactions on 17, 1737-1754, 2008]. According to widly used model , in case of linear electronic circuits, the variance of photon noise and additional noise sources is linearly dependent on the true signal value [ Bernd Jähne, Digital Image Processing, Springer 2005]

$$\sigma^2\big(I(p)\big) = a\,I(p) + b\,, \qquad\qquad (1)$$

where $I(p)$ is a signal intensity level in the pixel $p = (x,y)$ of an image

Therefore, digital image noise is linearly dependent on signal intensity. A lot of publications are devoted to a problem of signal-dependent noise estimation [Bosco et. al., Noise Reduction for Cfa Image Sensors Exploiting Hvs Behavior, Sensors 9(3), 1692-1713, 2009; Foi et. al., Practical poissonian-gaussian noise modeling and fitting for single-image raw-data, Image Processing, IEEE Transactions on 17, 1737-1754, 2008; Forstner, Image Preprocessing for Feature Extraction in Digital Intensity, Color and Range images, In Springer Lecture Notes on Earth Sciences, 1998; Hensel et. al., Robust and Fast Estimation of Signal-Dependent Noise in Medical X-Ray Image Sequences, Springer, 2006; Liu et. al., Automatic estimation and removal of noise from a single image, IEEE Transactions on Pattern Analysis and Machine Intelligence, 30(2), 299-314, 2008; Salmeri et. al., Signal-dependent Noise Characterization for Mammographic Images Denoising. IMEKO TC4 Symposium (IMEKOTC4 '08), Firenze, Italy, 2008; Waegli, Investigations into the Noise Characteristics of Digitized Aerial Images, In: Int. Arch. For Photogr. And Remote Sensing, Vol. 32-2, 1998]. So, in the work of [Hensel et. al., Robust and Fast Estimation of Signal-Dependent Noise in Medical X-Ray Image Sequences, Springer, 2006] is described a non-parametric method of frame-by-frame noise estimation of digital medical frames series , wherein a special accent is made on the algorithm operating in real time. A two-parametric approach to digital frames noise estimation is described in the paper [Foi et. al., Practical poissonian-gaussian noise modeling and fitting for single-image raw-data, Image Processing, IEEE Transactions on 17, 1737-1754, 2008]. The noise of an initial digital image obtained from a detector and not passed through non-linear transformations such as gamma correction etc., is modeled by an additive to signal random variable:

$$I_n(p) = I(p) + \sigma^2\big(I(p)\big) n(p)\,, \qquad\qquad (2)$$

where $I_n(p)$ is a signal intensity level in the pixel p of noisy image being under observation, $\sigma^2(I(p))$ is a dependence of noise variance on signal intensity of type (1), $n(p) \in N(0,1)$ is a normal random variable. It is suggested a method of creating model curves of noise variance that takes into account sensor's nonlinearities which cause under - and overexposure, i.e. violation of the linear function (1) on borders of the dynamic range.

The second problem in developing dynamic filter is that it is necessary to take into account and compensate changes of intensity of frames series under filtering, so called flicker. This problem resembles flicker-effect compensation task as the first stage in a chain of different methods of video frames processing. [Delon, Movie and Video Scale-Time Equalization. IEEE Transactions on Image Processing, 15(1):241-248, 2006; Pitie et. al., A New Robust Technique for Stabilizing Brightness Fluctuations in Image Sequence, In 2nd Workshop on Statistical Methods in Video Processing In conjunction with ECCV 2004. Springer, 2004; Wong, Improved Flicker Removal Through Motion Vectors Compensation, In Third International Conference on Image and Graphics, pp. 552-555, 2004]. An automatic intensity adjustment system or x-ray tube instability can cause flickers in digital x-ray frames series. The lack of flicker compensation in temporal images series averaging degrades filtering quality.. So, simple temporal averaging of stationary in motion frames without flicker compensation causes considerable distortion of estimated values of the current frame. If there is motion and its compensation on the bases of block-matching technique, a considerable change in frame sequence intensity causes rough errors in motion estimation and therefore its poor compensation.

There are two main aspects in flicker estimation and compensation. On the one hand, flicker-effect has no local nature over the field-of-view of one frame in a series. On the other hand, it occurs in dynamic process only, that is when considering a sequence of frames. These features comprise the main problem in flicker-effect compensating, that involves distinguishing between either local changes in frame contrast/intensity follow motion or they are caused by x-ray tube intensity change. A natural method of flicker-effect modeling widely described in papers [Delon, Movie and Video Scale-Time Equalization. IEEE Transactions on Image Processing, 15(1):241-248, 2006; Pitie et. al., A New Robust Technique for Stabilizing Brightness Fluctuations in Image Sequence, In 2nd Workshop on Statistical Methods in Video Processing In conjunction with ECCV 2004. Springer, 2004; Wong et.al., Improved Flicker Removal Through Motion Vectors Compensation, In Third International Conference on Image and Graphics, pp. 552-555, 2004], is based on the following formula:

$$I(p) = A(p)I_0(p) + B(p)\,, \qquad\qquad (3)$$

where $I_0(p)$ is a signal intensity level in the pixel $p$ ; $A(p)$, $B(p)$ are smooth slowly varying functions specified in the frame's field-of-view ; $I(p)$ is intensity of the frame under observation. This model suggests a linear dependence of the initial image intensity on the image intensity under observation as well as involves the above said flicker-effect space nonuniformity. A considerable number of flicker estimation and compensation methods is based on frame segmentation into a grid comprising overlapping blocks and block-by block assessment of $A(p)$, $B(p)$ functions' parameters with possible outliers filtration wherein for more accurate evaluation model parameters are calculated with motion estimation simultaneously.

The third problem when developing an accurate noise filtration method involves a necessity to take into consideration changes in a frame sequence caused by motion. Motion is an obligatory attribute of any digital medical frames series of diagnostic importance. Averaging non-stationary frames causes motion blurring artifacts in resulted images. In practice there are two solution to tackle the motion problem in frames series spatio-temporal averaging. The first-type approaches are based on a detection of image regions correlated with motion and decrease of the power of temporal noise reduction in these regions. [Aufrichtig et. al., X-Ray Fluoroscopy Spatio-Temporal Filtering with Object Detection. IEEE Trans. Medical Imaging 14 (1995) 733-746; Hensel et. al., Motion and Noise Detection for Spatio-Temporal Filtering of Medical X-Ray Image Sequences. Biomed, Tech.lBiomed. Eng. 50-1 (2005) 1106-1107; Konrad, Motion Detection and Estimation. In Bovik, A.C., ed.: Handbook of Image and Video Processing. 2nd ed. Elsevier Academic Press (2005) 253-274]. The second-type approaches estimate pixel motion between consecutive frames wherefore motion estimation and compensation [Brailean et. al., Noise Reduction Filters for Dynamic Image Sequences: A review. Proc. IEEE, vol. 83, pp. 1272-1292, 1995]. Static in motion frames can explicitly be generated after motion estimation by the use of motion compensation procedure.

Simplest algorithms of the first type are with reasonable facility realizable for execution in real time. For such methods motion detection can, for example, be thresholding the difference between a current averaged frame and a reference frame. If for a certain current frame pixel the said difference is higher than a definite threshold value, then temporal averaging is replaced, for example, by averaging in the space of that current frame. Threshold value is naturally to correspond to a noise level obtained at the noise estimation stage. It is worth mentioning that such motion estimation methods suffer from some disadvantages: impulse noise visibility, jagged edges. On the other hand, algorithms of the second type which are used for motion estimation and compensation (e.g. on the base of block-matching), are considered of higher quality [Brailean et. al., Noise Reduction Filters for Dynamic Image Sequences: A review. Proc. IEEE, vol. 83, pp. 1272-1292, 1995]. However there are difficulties in their usage: not all types of motion can be compensated effectively [Bernd Jähne, Digital Image Processing, Springer 2005], moreover, due to high computational demand these methods are difficult to realize in real time.

The fourth problem means necessity to provide a balance between filter quality and real-time execution demand. The necessity to implement medical frames series processing in real time at high frequency and large frame size (e.g., 30 frames per second, resolution 512x512 pixels, 15 frames per second, resolution 1024x1024 pixels/frame) comes into conflict with a desire to provide high quality filtering result in modern x-ray diagnostic systems. Such procedures as noise estimation or motion estimation themselves have a great computational demand even subject to modern computers capacity.

***Disclosure of the invention***

The claimed invention is aimed at increasing quality of digital frames series for medical application.

The technical result of the claimed invention is to present method of image quality increase subject to noise reduction.

The technical result of the claimed method of noise reduction in digital frames series comprising acquisition of digital x-ray frames, frame-by-frame signal-dependent noise variance estimation, motion estimation and compensation, flicker-effect estimation and compensation; frame recursive averaging is achieved while noise variance estimation by morphological deletion of noise pixel values correlated with abrupt changes in reference frame; then they tabulate the dependence of the noise on signal intensity by using robust piecewise-linear approximation of noise variance interval estimation; determine a noise map in the form of pixel-by-pixel noise variance estimation of the reference digital frame; when motion estimation and compensation a pyramidal scheme of block matching is used, estimation blocks are considered with overlapping, when motion compensation block overlapping is averaged; taking into account flicker-effect is obtained by division of reference and current frames by corresponding frames of averaged values which are obtained by linear LF filtration of given frames; when compensating flicker-effect a local mean reference frame intensity is reduced to a local mean current frame intensity wherefore the reference frame is divided by its motion-compensated frame of mean values, then multiplied by frame of mean values of the current frame; when recursive averaging motion compensation artifacts correction is implemented by a mix of a current filtered frame with its initial version on the baisis of calculation of their pixel and structural similarity.

A possible embodiment version of the claimed method in which at noise variance estimation to reduce the influence on calculated estimation of pixels corresponding to frame edges (removal of edges), the difference between current and compensated in motion reference frame is used.

The closest to the claimed method of digital medical x-ray images' noise estimation is a variant described in the paper [*Hensel et. al., Robust and Fast Estimation of Signal-Dependent Noise in Medical X-Ray Image Sequences, Springer, 2006*], in accordance to which the following stages to create signal-dependent noise estimation on the base of initial image are necessary:

■ to estimate a true signal by means of LF filtration of the initial image and calculate the difference between initial image and its estimation that results in noise image acquisition;

■ to remove by any way noise image pixel values corresponding to abrupt changes (edges, single "hot" pixels) in the initial image;

■ to divide the intensity range of the true image estimation into intervals; to accumulate for each such interval the noise frame pixel values that correspond to pixels of the true image estimate;

■ to compute noise variance in every interval using accumulated in this interval noise image pixel values.

The present invention uses noise estimation principles mentioned in the above paper. The main differences consists in that for each frame of series the following operations are performed:

■ pixel values of the noise frame, correlated with abrupt changes in initial image, are excluded by means of morphological extraction of pixel values of the noise frame, corresponding to the edges in initial image;

■ it is executed a robust local linear approximation of interval estimations of noise variance that results in a tabular function, describing noise dependence on the signal intensity;

■ on the basis of the true image estimate and computed tabular function they calculate a noise map as an image being pixel-by-pixel estimation of initial image noise variance.

The closest to the claimed method of taking into account and flicker-effect compensation is a variant described in the paper [Wong et.al., Improved Flicker Removal Through Motion Vectors Compensation. In Third International Conference on Image and Graphics, pp. 552-555, 2004]. In this method flicker is modeled by a smooth function that multiplicatively distorts frames series intensity values. This function estimation is suggested to implement mutually with motion estimation based on block-matching wherefore piecewise constant distorting function is used. Flicker-effect value in every motion estimation block of current frame is considered to be equal to a relation between mean values of this block and appropriate block of the reference frame, obtained as a result of motion compensation. Obtained piecewise constant field of the flicker-effect estimations undergoes of thresholding and smoothing to meet smoothness demands.

In the claimed invention flicker-effect is also modeled as a smooth multiplicative function. However, flicker-effect compensation is implemented by reducing local means of a previous frame to local means of a current frame wherefore the previous compensated frame (i.e. reference frame) is divided by its motion-compensated frame of mean values and then multiplied by the frame of current frame mean values. The frame mean values is obtained by moving averaging with the use of a window the aperture of which is equal to motion estimation block size. A noise map of the reference image is modified in the appropriate manner.

In the claimed invention the estimation and compensation of motion is based on the block-matching in frame series [Wang et. al., Fast Algorithms for the Estimation of Motion Vectors. IEEE Trans. Image Processing, vol. 8, no. 3, pp. 435-438, March 1999]. Consideration of the flicker-effect that considerably influences on estimation quality of the motion vectors is implemented by the simplest approach where at the motion estimation stage current and reference frames are divided by their mean values frames, i.e. that is a sort of brightness normalization. Besides consideration of flicker frame intensity the estimation of motion is made by the use of pyramidal scheme. The reason is in the fact that during in real time filtration of medical frames series the estimation and compensation of fast motion (e.g. during heart examination - coronarography- when close approaching to an object under examination) is especially difficult. As a result, to succeed in motion compensation, especially at low frame rate, appropriate block-matching region becomes too large. Therefore, to solve problem of increasing computation complexity during fast motion compensation in the invention is used a pyramidal algorithm for motion estimation at which:

• a current frame and a reference frame bound to be motion- compensated is decomposed into some levels of a pyramid of frames (no more than 3 levels depending on the examination type);

- block motion vector estimation is performed at LF pyramid components by scanning over a small region the radius of which is selected considering a number of pyramid levels;
- when converting from the lowest to the top pyramid level the size of a motion compensation block is scaled and its motion vector is specified by the search in the region of the small radius.

The pyramidal scheme application considerably extends a suitable block matching region in the reference frame. To reduce excessive blocking that is common for rectangular block-based motion compensation the claimed invention suggests overlapped block compensation [Orchard et. al., Overlapped Block Compensation: An Estimation-Theoretic Approach. IEEE Transactions On Image Processing, Vol. 3, No. 5, September 1994, pp. 693-699]. A typical overlapping size is equal to a quarter of the block's radius. When creating a motion-compensated frame the pixels belonging to overlapped block regions are averaged by means of a smooth weighting function.

A distinctive feature of the claimed invention is the application of special method of refinement of artifacts of motion compensation algorithm. Rough motion compensation errors can appear because of too small radius of the search (matching) region, objects overlapping or abrupt change of a frame content, are reduced by mix of filtered frame and its version averaged in space. Mixing weights are computed on the base of the pixel and structural similarity of the current frame to motion-compensated frame. As a measure of pixel similarity is used bilateral distance [Tomasi et. al., Bilateral Filtering for Gray and Color Images, In Proc. 6th Int. Conf. Computer Vision, New Delhi, India, 1998, pp. 839-846]. Euclidean distance between the pixel blocks of a current and compensated frames are used for structural similarity computation [Buades et. al., Nonlocal image and movie denoising. Int. J. comput. Vision, 76(2):123-139, 2008]. Pixel and structural similarities are linearly mixed.

In the claimed invention, aimed at providing effective noise reduction in real time the Kalman filter with automatic estimation of signal-dependent noise, estimation of possible abrupt intensity change of frame series, motion estimation and compensation, the refinement of motion compensation artifacts and temporal over-smoothing is used. When dividing the given tasks between a common PC's multicore processor and nvidia® cuda enabled graphics cards, there was succeeded in obtaining a result fitted for real time high-quality filtration demand.

## Detailed description of the invention

The accompanying drawings 1- 5 illustrate the claimed technical solution, its possible embodiment and technical result achievement.

Fig. 1 shows a device for x-ray frame acquisition.
Fig. 2 shows a tabular function describing the dependence of normal noise deviation on signal intensity for frame series of vascular study represented in Fig.4.
Fig. 3 shows normal noise deviation map for the frame represented in Fig. 4.
Fig. 4 shows an initial frame of frame series.
Fig. 5 shows a result of given frame series filtration, denoising level is 80% ($r$ = 0.8, formula (12)).
To improve perception of the figures 4 and 5 a sharpness enhancement filter was used.
Fig. 6 shows a differential image of the frames represented in Fig. 4 and 5.

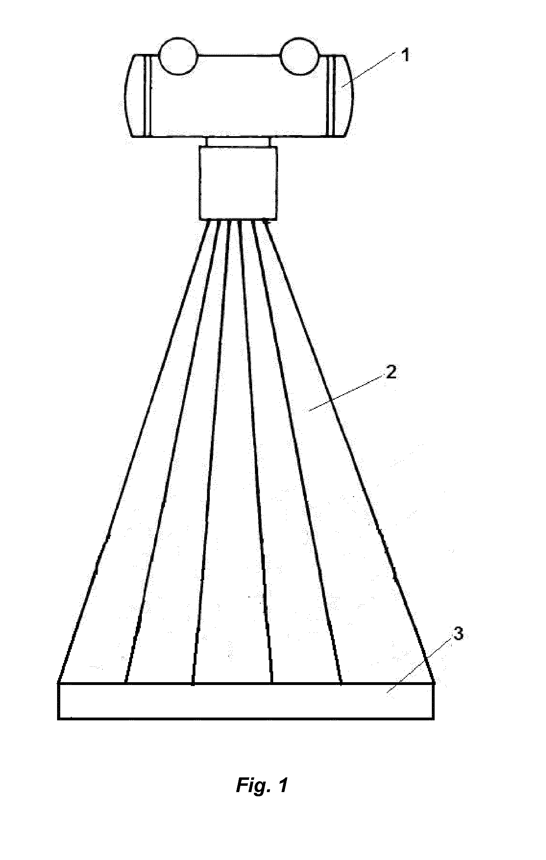

X-ray frame acquisition is implemented for instance by the device represented in Fig.1. It comprises an x-ray tube 1 that emits an x-ray beam 2. The x-ray beam 2 enters a detector 3. The detector 3 consists of a scintillation screen (not shown) and photosensitive array (not shown). The scintillation screen is optically coupled with the active surface of the photosensitive array. The x-ray beam 2 entered a detector 3, is converted by the scintillation screen into visible light that is converted into digital form by the sensors of the detector.

Suggested in the claimed invention filter reduces noise within several stages. Let us consider each of the said stages in details.

*Stage 1. Frame-by-frame estimation of signal intensity-dependent noise variance.* At this stage frame estimation is implemented by means of LF linear filtration of the current frame [Hensel et. al., Robust and Fast Estimation of Signal-Dependent Noise in Medical X-Ray Image Sequences, Springer, 2006]. In order to provide speed strict requirements it is reasonable to use in real time applications the simplest linear filtration (e.g. binomial filter). On the base of the obtained smooth frame a noise frame is built - a difference between initial and filtered frames.

Image estimation by simplest filters is non-ideal - edges turned out over-smoothed. Taking the difference between initial and smoothed frameS results in a noise frame comprising besides noise pixels in smooth regions a definite number of pixels corresponding to abrupt changes (e.g. anatomical structure edges - and non-noise pixels). These pixels can considerably distort variance value under estimation and shall be excluded from calculation. For that there are different technics [Foi et. al., Practical poissonian-gaussian noise modeling and fitting for single-image raw-data. Image Processing, IEEE Transactions on 17, 1737-1754 (October 2008), Salmeri et. al., Signal-dependent Noise Characterization for Mammographic Images Denoising. IMEKO TC4 Symposium (IMEKOTC4 '08), Firenze, Italy, September 2008] which as a rule consist in thresholding smoothed derivatives of the initial frames wherein threshold value is determined by S/N local estimation. In a frame region comprising a great number of details such an estimation turns out unsatisfactory. Therefore, in the claimed invention when removing edges it is suggested an easier approach to select edges that does not require computing derivatives and local estimations of the standard deviation. The essence of this morphological approach of removing non-noise pixels consists in the following:

    1. noise frame is divided into two values - binary frames of positive and negative changes;
    2. to select edge corresponding regions obtained frames are subjected to morphological erosion with subsequent dilatation;
    3. processed frames are united into one binary frame - an edge map of the initial frame.

In order to better save fine structures the erosion and dilatation implementation is based on 2x2 small masks (2 x 2 window).

When computing interval noise variance estimations minimal and maximal values of estimated frame intensity (edges of intensity range) is determined, a subinterval (e.g. 32 grayscale degrees) is selected. Then, for each pixel of the estimated frame is found an interval comprising given pixel value and appropriate noise frame pixel value is used to compute noise variance estimation in this interval (wherein edge pixels are excluded). For computation of interval estimation of noise variance can be used different formulas, e.g. a common unbiased estimate or robust estimation using median absolute deviation [Hensel et. al., Robust and Fast Estimation of Signal-Dependent Noise in Medical X-Ray Image Sequences, Springer, 2006; Foi et. al., Practical poissonian-gaussian noise modeling and fitting for single-image raw-data, Image Processing, IEEE Transactions on 17, 1737-1754, 2008]. This procedure results in a tabular function describing the dependence of noise variance on signal intensity.

Inaccuracy, occurring when building an edge map can cause rough errors during computation of interval variance estimation. Therefore these estimations define more exactly using the technique iterative outlier removal [Hensel et. al., Robust and Fast Estimation of Signal-Dependent Noise in Medical X-Ray Image Sequences, Springer, 2006]: for each interval iteratively are excluded noise pixel values exceeding threshold in magnitude, equal to three standard noise variances with subsequent recalculation of noise variance estimation in this interval.

After the interval noise variance estimations have been computed the estimation of the dependence of noise variance on intensity. At parametric approach the parameter estimation of noise model (1) can be built in a certain way (e.g. least-square method, likelihood function minimization, directional optimization). Sensor linearity can also be considered [Foi et. al., Practical poissonian-gaussian noise modeling and fitting for single-image raw-data, Image Processing, IEEE Transactions on 17, 1737-1754, 2008]. However, as it is mentioned in [Hensel et. al., Robust and Fast Estimation of Signal-Dependent Noise in Medical X-Ray Image Sequences, Springer, 2006], building of a parametric model adequately describing the dependence of noise variance on signal intensity can involve difficulties because of some factors. These factors can involve sensor nonlinearity, nonlinear pre-processing of initial frames (e.g. the logarithm finding). That is why a more realizable and universal approach consisting in based on interval variance estimations a non-parametric estimation of the dependence of noise on intensity is built.

In the claimed invention a non-parametric approach to the building of sought-for dependence is used wherein on the base of obtained interval estimations of noise variance an interpolating tabular function is created. The given tabular function is formed on the base of robust local linear approximation of the interval variance estimations. The use of robust methods provides additional reducing outliers' impact (rough errors in the interval variance estimations), while approximation locality provides repetition of the complex trend of a curve describing the dependence of noise on intensity. So, obtained tabular function for each intensity value of the initial frame associates noise variance estimation. Tabular entry point can for instance serve intensity of the frame under estimation.

In practice in case of parametric noise estimation an approach can be used at which a conversion stabilizing noise variance of initial frame is applied [Starck et. al., Image Processing and Data Analysis: The Multiscale Approach. Cambridge University Press, 1998; Bernd Jähne, Digital Image Processing, Springer 2005]. Thus, the problem of signal-dependent noise filtration consists in the task of reduction of additive signal-non-dependent noise variance. In the claimed invention while implementing non-parametric noise estimation and building a noise map the following approach is suggested: based on the estimated image and interpolating table it is built a noise map that is an image each pixel of which estimates mean-square noise deviation in an appropriate initial image pixel. The noise map provides pixel-by-pixel noise estimation with sufficient accuracy for practical application. An embodiment version of the claimed invention is possible where during noise variance estimation in order to reduce the influence on calculating estimation of frame pixels corresponding to frame edges (removal of edges) a difference between the current- and reference motion- compensated frames is used.

*Stage2. Estimation and compensation of motion and flicker-effect.* In the claimed invention motion estimation is implemented on the base of search of block correspondence considering possible variability of frame series intensity.

For this purpose before using the motion vector search procedure current and reference frames are divided by their frames of average values. The frames of average values of corresponding series frames are obtained due to low-pass filtering with filter aperture equaled to the size of motion estimation block, for example, 16x16 pixels. Motion estimation blocks are given overlapped when overlapping is equal to ¼ of the block size. When block matching a motion estimation pyramidal algorithm is used during which:

- the current frame and reference frame that shall be motion-compensated against the current frame is divided into several pyramidal levels,

- block motion vector estimation is implemented at LF frame pyramids;

- during transition from the lower to the upper pyramid's level the block sizes and their overlappings are scaled, the motion vector of the given block is specified by the search over the small radius region.

- When building a motion-compensated frame the overlapping regions are averaged.

From the reference - to the current frame estimation is implemented at LF pyramid's frames. No more than three decomposition levels are used. As a rule they are two since when using more decomposition levels for motion estimation of fine objects (thin vessels) there may be rough errors in motion vector estimation. During transition from the lower to the upper pyramid's level the block sizes and their overlappings are doubled wherein the motion vector is specified by the search over the small region for example 3x3 pixels. While computing Euclidean squared metric as a measure of blocks similarity the technique of early stopping calculations is used [Wang et. al., Fast Algorithms for the Estimation of Motion Vectors. IEEE Trans. Image Processing, vol. 8, no. 3, pp. 435-438, March 1999]. Besides, the technique of motionless blocks removal based on motion vector estimation is used: if the sample standard deviation of motion estimation block does not exceed $k \cdot \sigma(\overline{p})$, where $k$ is the threshold value (here this parameter is 2 - 3), $\sigma(\overline{p})$ is a standard frame's noise deviation in the central pixel of the motion estimation block.

After motion estimation a compensated reference frame is formed wherein, to reduce excessive blocking the block overlappings are averaged. To average the block overlappings a smooth weighting window is used. Further, in order to compensate flicker-effect the reference frame local means are reduced to the current frame local means. For that, the compensated reference frame is divided by its motion-compensated average frame and multiplied by the frame of average values of the current frame in accordance with the expression

$$\hat{I}_{t-1}^{c}(p) = \frac{I_{t-1}^{c}(p) \cdot \overline{I}_{t}(p)}{\overline{I}_{t-1}^{c}(p)} , \qquad (4)$$

where $I_{t-1}^{c}(p)$ is a motion-compensated reference frame; $\overline{I}_{t}(p)$ is a frame of average values of the current frame of the series in a pixel $p$ ; $\overline{I}_{t-1}^{c}(p)$ is a motion-compensated frame of average values of the reference frame; $\hat{I}_{t-1}^{c}(p)$

is a resulted motion-compensated reference frame, the local average intensity of which is reduced to the local average intensity of the current frame. The map of the reference frame noise variance undergoes an appropriate conversion.

*Stage 3. Recursive averaging providing motion compensation artifacts correction.* Motion compensation rough errors occurring due to too small radius of the matching region, objects overlapping or abrupt change of the frame content are reduced in the claimed invention by a mix of a filtered frame with its in space-averaged version. Mixing weights are calculated on the base of pixel and structural similarities of the current and motion-compensated frames. As a measure of pixel similarity bilateral distance is used [Tomasi et. al., Bilateral Filtering for Gray and Color Images, In Proc. 6th Int. Conf. Computer Vision, New Delhi, India, 1998, pp. 839-846]. For structural similarity computation the Euclidean distance between pixel blocks of the current and compensated frames [Buades et. al., Nonlocal image and movie denoising. Int. J. comput. Vision, 76(2):123-139, 2008].

Let $I_{r}(p)$, $I_{c}(p)$ be intensity values of the reference and current frames in the pixel p correspondingly. So, pixel similarity of frames is calculated according to the following threshold function:

$$W_p(p) = \frac{1}{1 + e^{\left(k_p \cdot (I_c - I_r)^2 / \sigma^2(I_c) - T_p\right)}},$$

where $k_p$, $T_p$ are parameters specifying the function form; $\sigma^2(I_c)$ is a noise variance of the current frame in the pixel p . On the other hand, structural similarity between these frames is calculated according to the following expression:

$$W_s(p) = \frac{1}{1 + e^{\left(k_s \cdot \|P(I_c) - P(I_r)\|^2 / \sigma^2(I_c) - T_s\right)}},$$

where $k_s$, $T_s$ are parameters specifying the form of the threshold function; $P(I_c)$, $P(I_s)$ are square pixel blocks (patchy) of the appropriate frames with the center in the pixel numbered p ; parameters $\|P(I_c)-P(I_r)\|^2$ are a squared Euclidean distance between pixel blocks.

For calculation of the resulted similarity measure of the frames combining pixel and structural similarities the following expression is used:

$$W(p) = \lambda \cdot W_s(p) + (1 - \lambda) \cdot W_p(p). \qquad (5)$$

$\lambda$ specifies a structural weight prevalence over the weight based on appropriate pixel intensity. While frame mixing the mixed weight computation at $\lambda \approx 1$ (for example, 0.9) provides reducing the impact of single impulse values of pixel intensity and simultaneously reconstructing correct structural frame content (similar to the content of the initial current non-compensated frame).

Temporal averaging is implemented recursively by the use of one-dimensional Kalman-filtration for motion-compensated reference frame (frame-predictor) and current frame (observed frame) according to the following expressions

1). *Kalman estimation-based intensity:*

$$K_t(p) = \frac{\hat{\Delta}^c_{t-1}(p) + \Delta_t(p)}{\hat{\Delta}^c_{t-1}(p)}, \qquad (6)$$

$$\tilde{I}_t(p) = \hat{I}^c_{t-1}(p) + K_t(p) \cdot \left(I_t(p) - \hat{I}^c_{t-1}(p)\right), \qquad (7)$$

$$\tilde{\Delta}_t(p) = \hat{\Delta}^c_{t-1}(p) - K_t(p) \cdot \hat{\Delta}^c_{t-1}(p), \qquad (8)$$

2). *Artifact compensation:*

$$\tilde{I}_t(p) = W(p) \cdot \tilde{I}_t(p) + (1 - W(p)) \cdot I^e_t(p), \qquad (9)$$

$$\tilde{\Delta}_t(p) = W^2(p) \cdot \tilde{\Delta}_t(p) + (1 - W(p))^2 \cdot \Delta_t(p), \qquad (10)$$

3). *Controlled level of noise reduction:*

$$\widetilde{I}_t(p) = r \cdot \widetilde{I}_t(p) + (1-r) \cdot I_t(p), \qquad\qquad (11)$$

$$\widetilde{\Delta}_t(p) = r^2 \cdot \widetilde{\Delta}_t(p) + (1-r)^2 \cdot \Delta_t(p). \qquad\qquad (12)$$

Here $\hat{\Delta}_{t-1}^c(p)$ is a frame-predictor's noise variance value (previous frame, reference frame) that is motion-compensated and intensity-normalized, this value is obtained from the noise map; $\Delta_t(p)$ is a observed frame's noise variance value (current frame); $\hat{I}_{t-1}^c(p)$ is a reference frame intensity, motion-compensated and intensity-normalized (see (4)); $I_t(p)$ is the intensity of the observed frame; $\widetilde{I}_t(p)$ is a recursive estimation of the observed frame intensity; $\widetilde{\Delta}_t(p)$ is a recursive estimation of the observed frame variance; $W(p)$ is a measure of pixel and structural similarity of the recursively-averaged frame to the observed frame (see (5)); $I_t^e(p)$ is intensity estimation by averaging in the observed frame using 3x3 pixels binomial filter; $r$ is controlled level of noise reduction. As a measure of the observed frame error is used a computed noise map of the noise variance $\Delta_t(p)$ wherein the noise variance map $\hat{\Delta}_{t-1}^c(p)$ of the frame-predictor undergoes motion- and intensity compensation on the base of obtained during the motion estimation stage vectors and computed frames of average values.

The best embodiment of the invention

For the noise variance estimation of the current frame we obtain at first an estimated frame and a noise frame wherefore the initial frame $I(x,y)$ is filtered by the following 3x3 LF linear binomial filter:

$$H_1 = \begin{bmatrix} 1 & 2 & 1 \end{bmatrix}/4, \quad H = H_1^T \cdot H_1.$$

Wherein the smoothed frame $I_e(x,y)=I*H$ is obtained. Then, the noise frame $N_e(x,y) = I(x,y)-I_e(x,y)$ is computed.
At removal of edges the noise frame $N_e(x,y)$ - based calculation provides generation of frames having positive and negative changes

$$N_e^-(x,y) = \begin{cases} 1, & N_e(x,y) < 0 \\ 0, & N_e(x,y) >= 0 \end{cases},$$

$$N_e^+(x,y) = \begin{cases} 1, & N_e(x,y) > 0 \\ 0, & N_e(x,y) <= 0 \end{cases}.$$

To select regions corresponding to edges the given binary images undergo morphological operations such as erosion and dilation using 2x2 masks:

$$B_e^-(x,y) = dilate_{[2x2]}\left(erode_{[2x2]}\left(N_e^-(x,y)\right)\right),$$

$$B_e^+(x,y) = dilate_{[2x2]}\Big(erode_{[2x2]}\big(N_e^+(x,y)\big)\Big).$$

Further, these frames are united to get an edge map of the initial frame

$$E(x,y) = B_e^-(x,y) \cap B_e^+(x,y).$$

In order to compute interval noise variance estimations $I_{min}$ and $I_{max}$ of the frame intensity $I_e(x,y)$ is found, and divide the intensity range into intervals $M_i$ with the pitch $h_M$ ($h_M$ = 32). For each pixel of the frame $I_e(x,y)$ the interval comprising this pixel is found, and an appropriate pixel value of the $N_e(x,y)$ is used to calculate noise variance estimation $\sigma^2(i)$ in the given interval $M_i$, wherein the pixel values having edge map values $E(x,y)=1$ are excluded. When computing interval noise variance estimation the expression of unbiased variance estimation is applied

$$\sigma^2(i) = \frac{1}{n_i - 1}\left(\sum_{j=1}^{n_i - 1}\left(N_e^i(j) - \overline{N}_e^i\right)^2\right),$$

where $N_e^i(j)$ is a pixel value of the noise frame $N_e(x,y)$ from the interval $M_i$; $n_i$ is a total amount of accumulated pixel values of the noise frame in the interval $M_i$, $\overline{N}_e^i$ is noise pixel average value in the interval $M_i$.

Obtained interval variance estimations $\sigma^2(i)$ are specified in such a way that for each interval $M_i$ are iteratively excluded noise pixel values exceeding threshold in magnitude, equal to three standard noise variances with subsequent recalculation of noise variance estimation in this interval:

$$N_e^i[k+1] = \left\{N_e(x,y) \mid \left(N_e(x,y) \in N_e^i[k]\right) \cap \left(|N_e(x,y)| \le 3\sigma(i)\right)\right\},$$

where $N_e^i[k+1]$ is a set of noise pixel values in the interval $M_i$ for iteration $k$. Further calculations involve only those intervals where a sufficient amount of noise pixel values (e.g. 500) are accumulated. Besides, the intervals the average value $\overline{N}_e^i$ of which significantly different from zero(more than a half of the grid intervals pitch $h_M$), are not taken into consideration since residual non-noise pixel values dominate in such intervals with great likelihood.

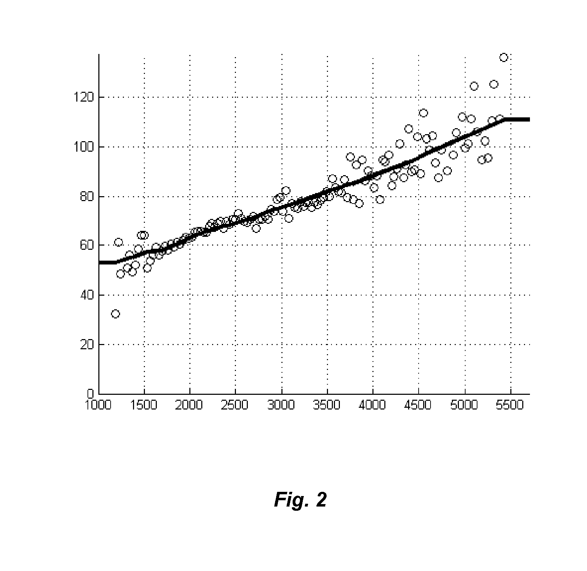

For the estimation of the dependence of noise variance on the intensity using obtained interval estimations of noise variance an interpolating tabular function is built (circles in Fig.2). This tabular function is based on a robust linear approximation of interval variance estimations. For that in the grid of intervals $M_i$ an approximation pitch $h_I$ and a radius $r_I$ (that can be dependent on a number of points $n_i$ in intervals $M_i$) are selected. Values obtained in the previous stage of the tabular function noise variance/signal intensity are approximated according to the expression :

$$\hat{\sigma}^2(k \cdot h_I) = a \cdot m_k + b,$$

where $k$ is the number of approximation point; $m_k$ is the center of the interval $M_i(k \cdot h_I)$; parameters $a$, $b$ are computed from the minimal sum of absolute deviations [Press et. al., Numerical Recipes in C: The Art of Scientific Computing, Second Edition. New York: Cambridge University Press, 1999]

$$\sum_{j=kh_I-r_I}^{kh_I+r_I} |\hat{\sigma}^2(j) - a \cdot m_j - b| \rightarrow \min_{a,b} .$$

The process results in the table of values which is interpolated $\{M_i(k \cdot h_I), \hat{\sigma}^2(k \cdot h_I)\}$ over the whole range of intensity $[I_{min}, I_{max}]$, that is interpolating table of the sought-for dependence of the noise variance on the signal intensity (solid line, Fig. 2).

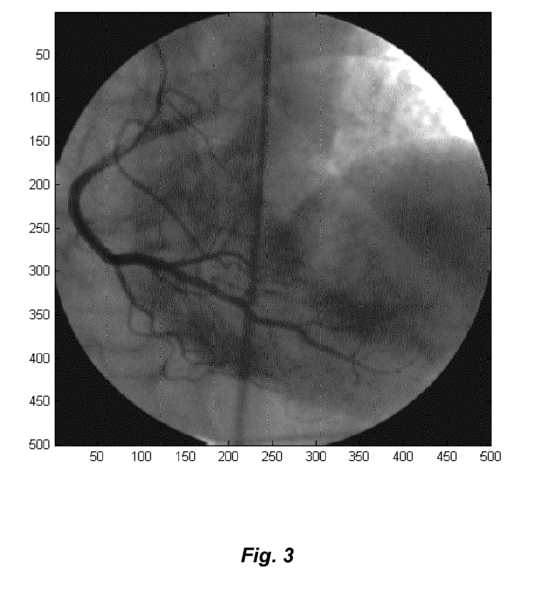

Noise map being an frame each pixel of which estimates noise variance in the appropriate pixel of the initial frame (Fig. 3) is built on the base of the estimated frame and interpolating table.

Motion estimation and compensation involves block matching and possible variability of frame series intensity. For that before motion estimation current and reference frames are divided by their frames of average values. The frames of average values are obtained due to low-pass filtering with filter aperture equaled to the size of motion estimation block, for example, 16x16 pixels. Motion estimation blocks are given with overlapping when overlapping is for example equal 4. When block matching a motion estimation pyramidal algorithm is used during which:

- the current frame and reference frame that shall be motion-compensated against the current frame is divided into several pyramidal levels,

- block motion vector estimation is implemented at LF image pyramids;

- during transition from the lower to the upper pyramid's level the block sizes and their overlappings are scaled, the motion vector of the given block is specified by the search over the small radius region.

- when building a motion-compensated frame the overlapping regions are averaged.

From the reference- to the current frame estimation is implemented at LF pyramid's frames. No more than three decomposition levels are used. As a rule they are two since when using more decomposition levels for motion estimation of fine objects (thin vessels) there may be rough errors in motion vector estimation. During transition from the lower to the upper pyramid's level the block sizes and their overlappings are doubled wherein the motion vector is specified by the search over the small region for example 3x3 pixels. While computing Euclidean squared metric as a measure of blocks similarity the technique of early stopping calculations is used.. [Wang et. al., Fast Algorithms for the Estimation of Motion Vectors. IEEE Trans. Image Processing, vol. 8, no. 3, pp. 435-438, March 1999]. Besides, the technique of motionless blocks removal based on motion vector estimation is used: if the sample standard deviation of motion estimation block does not exceed $k \cdot \sigma(\bar{p})$, where $k$ is a threshold value (here this parameter is 2 - 3), $\sigma(\bar{p})$ is a standard frame's noise deviation in the central pixel of the motion estimation block..

After motion estimation a compensated reference frame is formed wherein, to reduce excessive blocking the block overlappings are averaged. Reference frame noise map is compensated in the similar way.

To average the block overlappings a smooth weighting window, for example cosine, is used.

Further, in order to compensate flicker-effect the reference frame local means are reduced to the current frame local means. For that, the compensated reference frame is divided by its motion-compensated average frame and multiplied by the frame of average values of the current frame in accordance with the expression 4. Noise map of the reference frame undergoes a similar normalizing

Recursive averaging of the current frame. Temporal averaging is implemented recursively by the use of one-dimensional (pixel-by-pixel) Kalman-filtration for motion-and intensity compensated frames according to the expressions (6)-(12).

To correct temporal averaging artifacts caused by motion compensation errors a mix of a filtered normalized frame with ts initial version (expressions (5), (9), (10)). Mixing weights (5) are calculated on the base of pixel and structural similarities of the current and motion-and intensity-compensated frames, wherein as a measure of structural similarity the Euclidean distance between the pixel blocks of a current and compensated frames is used.

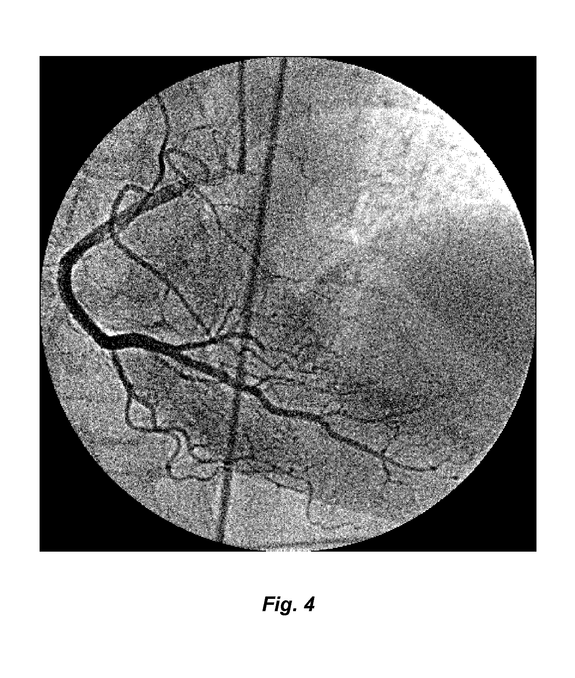

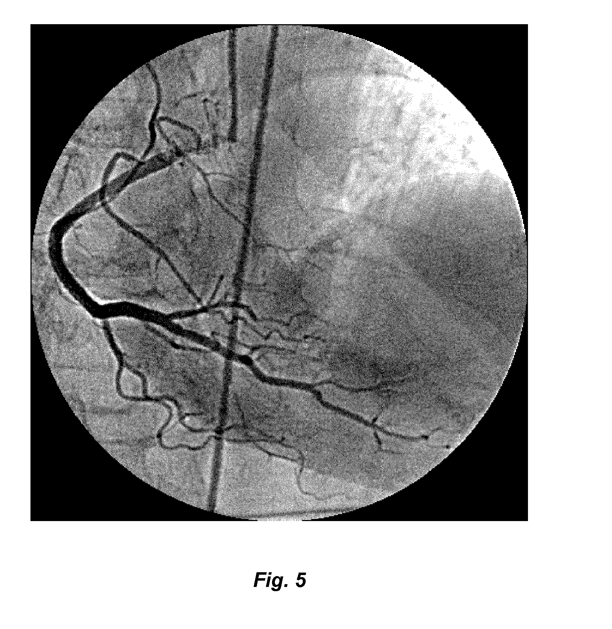

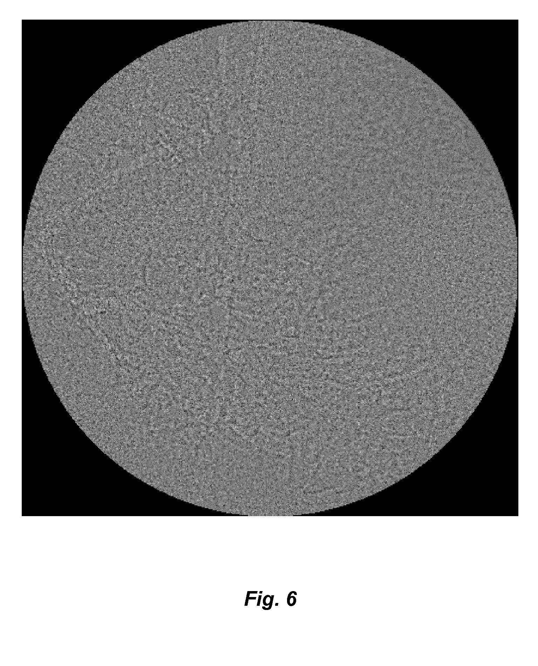

Structural similarity calculation is provided with a sliding block the size of which is selected, for example 11x11 pixels. Pixel similarity calculation is computed as a distance in intensity space between the current and reference motion-compensated frames. Noise reduction degree $r$ in expressions (11),(12) in real series are selected for example, $r$ = 0.8, which corresponds to fivefold noise reduction. Figures 4-6 show the result of filter application to a real series (angiographic examination): fig. 4 shows the initial frame of the series, fig. 5 shows the filtered frame, fig. 6 shows the frames difference, fig. 4-5; for better perception the initial and filtered frames undergo sharpness improvement procedure.

**Claims**

1. A method of noise reduction of digital x-ray frames series comprising acquisition of digital x-ray frames series, frame-by-frame estimation of signal-dependent noise variance, motion estimation and compensation, flicker-effect estimation and compensation, recursive frame averaging, **characterized in that**,
frame-by-frame estimation of signal intensity-dependent noise variance involves morphological deletion of pixel values of noise frame corresponding to edges of the initial frame; tabular dependence of noise on signal intensity is obtained with the use of robust piecewise-linear approximation of interval estimations of noise variance; a noise map is computed as a pixel-by-pixel estimation of noise variance of the initial digital frame; while estimation and compensation of motion and flicker-effect a pyramidal scheme for the block matching is applied; motion estimation blocks are considered with overlapping, while motion compensation the block overlappings are averaged by applying a smooth weighting window; flicker-effect compensation is implemented by division of the reference- and current frames by appropriate frames of average values, which are obtained by LF-filtration of the given frames; to compensate flicker-effect the local average intensity of the reference frame is reduced to the local average intensity of the current frame, wherein the reference frame is divided by its motion-compensated frame of average values and multiplied by the frame of average values of the current frame; recursive averaging with motion compensation artifacts correction involves mixing of the current filtered frame with its initial version based on the computation of pixel and structural similarity of the given frames.

2. The method of claim 1, wherein noise variance estimation aimed at reducing an impact on computed estimation image pixels corresponding with edges of the frame involves the difference between the current and reference motion-compensated frames.

**Fig. 1**

**Fig. 2**

Fig. 3

Fig. 4

*Fig. 5*

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHAN.** Image Sequence Filtering in Quantum-Limited Noise with Applications to Low-Dose Fluoroscopy. *IEEE Trans. Medical Imaging,* 1993, vol. 12 (3), 610-621
- **BOSCO.** oise Reduction for Cfa Image Sensors Exploiting Hvs Behavior. *Sensors,* 2009, vol. 9 (3), 1692-1713
- **FOI,.** Practical Denoising of Clipped or Overexposed Noisy Images. *Proc. 16th European Signal Process. Conf.,* 2008
- **BOSCO.** Noise Reduction for Cfa Image Sensors Exploiting Hvs Behavior. *Sensors,* 2009, vol. 9 (3), 1692-1713
- **FOI.** Practical poissonian - gaussian noise modeling and fitting for single-image raw-data. *Image Processing, IEEE Transactions,* 2008, vol. 17, 1737-1754
- **BERND JÄHNE.** Digital Image Processing. Springer, 2005
- **FOI.** Practical poissonian-gaussian noise modeling and fitting for single-image raw-data. *Image Processing, IEEE Transactions,* 2008, vol. 17, 1737-1754
- **FORSTNER.** Image Preprocessing for Feature Extraction in Digital Intensity, Color and Range images. *Springer Lecture Notes on Earth Sciences,* 1998
- **HENSEL.** Robust and Fast Estimation of Signal-Dependent Noise in Medical X-Ray Image Sequences. Springer, 2006
- **LIU.** Automatic estimation and removal of noise from a single image,. *IEEE Transactions on Pattern Analysis and Machine Intelligence,* 2008, vol. 30 (2), 299-314
- **SALMERI.** Signal-dependent Noise Characterization for Mammographic Images Denoising. *IMEKO TC4 Symposium (IMEKOTC4 '08),* 2008
- **WAEGLI.** Investigations into the Noise Characteristics of Digitized Aerial Images. *Int. Arch. For Photogr. And Remote Sensing,* 1998, vol. 32-2
- **FOI.** Practical poissonian-gaussian noise modeling and fitting for single-image raw-data, Image Processing. *IEEE Transactions,* 2008, vol. 17, 1737-1754
- **DELON.** Movie and Video Scale-Time Equalization. *IEEE Transactions on Image Processing,* 2006, vol. 15 (1), 241-248
- A New Robust Technique for Stabilizing Brightness Fluctuations in Image Sequence. **PITIE.** 2nd Workshop on Statistical Methods in Video Processing In conjunction with ECCV 2004. Springer, 2004
- **WONG.** Improved Flicker Removal Through Motion Vectors Compensation. *Third International Conference on Image and Graphics,* 2004, 552-555
- **AUFRICHTIG.** Ray Fluoroscopy Spatio-Temporal Filtering with Object Detection. *IEEE Trans. Medical Imaging,* 1995, vol. 14, 733-746
- **HENSEL.** Motion and Noise Detection for Spatio-Temporal Filtering of Medical X-Ray Image Sequences. *Biomed, Tech.IBiomed. Eng.,* 2005, vol. 50-1, 1106-1107
- Motion Detection and Estimation. **KONRA.** Handbook of Image and Video Processing. Elsevier Academic Press, 2005, 253-274
- **BRAILEAN.** Noise Reduction Filters for Dynamic Image Sequences: A review. *Proc. IEEE,* 1995, vol. 83, 1272-1292
- **BRAILEAN.** Noise Reduction Filters for Dynamic Image Sequences: A review. *Proc. IEEE,* 1995, vol. 83, 1272-1292
- **WANG.** Fast Algorithms for the Estimation of Motion Vectors. *IEEE Trans. Image Processing,* March 1999, vol. 8 (3), 435-438
- **ORCHARD.** Overlapped Block Compensation: An Estimation-Theoretic Approach. *IEEE Transactions On Image Processing,* September 1994, vol. 3 (5), 693-699
- **TOMASI.** Bilateral Filtering for Gray and Color Images. *Proc. 6th Int. Conf. Computer Vision,* 1998, 839-846
- **BUADES.** Nonlocal image and movie denoising. *Int. J. comput. Vision,* 2008, vol. 76 (2), 123-139
- **FOI.** Practical poissonian-gaussian noise modeling and fitting for single-image raw-data. Image Processing. *IEEE Transactions,* October 2008, vol. 17, 1737-1754
- **SALMERI.** ignal-dependent Noise Characterization for Mammographic Images Denoising. *IMEKO TC4 Symposium (IMEKOTC4 '08), Firenze, Italy,* September 2008
- **STARCK.** Image Processing and Data Analysis: The Multiscale Approach. Cambridge University Press, 1998

- **TOMASI.** Bilateral Filtering for Gray and Color Images. *Proc. 6th Int. Conf. Computer Vision, New Delhi, India,* 1998, 839-846

- **PRESS.** Numerical Recipes in C: The Art of Scientific Computing. Cambridge University Press, 1999